# EUROPEAN PATENT SPECIFICATION

(11) **EP 3 221 241 B1**
(45) Date of publication and mention of the grant of the patent: **28.04.2021**
(21) Application number: 15805663.0
(22) Date of filing: 17.11.2015
(51) Int. Cl.: B32B 43/00, B65G 49/06

(54) **APPARATUS AND METHOD OF PEELING A MULTI-LAYER SUBSTRATE**
VORRICHTUNG UND VERFAHREN ZUM ABLÖSEN EINES MEHRSCHICHTIGEN SUBSTRATS
APPAREIL ET PROCÉDÉ DE DÉCOLLAGE D'UN SUBSTRAT MULTICOUCHE

(30) Priority: 19.11.2014 US 201462081900 P
(43) Date of publication of application: 27.09.2017
(73) Proprietor: Corning Incorporated, Corning, New York 14831 (US)
(72) Inventor: ALLINGTON, Eric Lewis, Campbell, New York 14821 (US); SMITH, Timothy Paul, Painted Post, New York 14870 (US); WESTBROOK, Jamie Todd, Sayre, PA 18840 (US)
(74) Representative: Elkington and Fife LLP
(86) International application number: PCT/US2015/060963
(87) International publication number: WO 2016/081391

(56) References cited:
- EP-A1- 2 075 633
- WO-A1-96/01183
- WO-A2-2012/092026
- CN-A- 103 972 133
- US-A1- 2007 261 783
- US-A1- 2014 150 980

## Description

### TECHNICAL FIELD

The present disclosure relates generally to methods and apparatus for processing including peeling and, more particularly, to methods and apparatus for processing including the step of peeling a leading peripheral edge of a carrier substrate from a first substrate comprising a glass substrate and/or a silicon wafer.

### BACKGROUND

There is interest in using thin, flexible glass in the fabrication of flexible electronics or other devices. Flexible glass can have several beneficial properties related to either the fabrication or performance of electronic devices, for example, liquid crystal displays (LCDs), electrophoretic displays (EPD), organic light emitting diode displays (OLEDs), plasma display panels (PDPs), touch sensors, photovoltaics, etc. One component in the use of flexible glass is the ability to handle the glass in a sheet format and not in a roll format.

To enable the handling of flexible glass during processing of the flexible glass, the flexible glass is typically bonded to a relatively rigid carrier substrate using a polymer binding agent. Once bonded to the carrier substrate, the relatively rigid characteristics and size of the carrier substrate allow the bonded structure to be handled in production without undesired bending or causing damage to the flexible glass. For example, thin-film transistor (TFT) components may be attached to the flexible glass in the production of LCDs.

After processing, the flexible glass is removed from the carrier substrate. However, given the delicate nature of the flexible glass, the force applied to detach the flexible glass from the carrier substrate can damage the flexible glass. Moreover, the separation process, which typically includes the insertion of an implement to the flexible glass-carrier interface, can often damage the carrier substrate as well, rendering the carrier substrate unusable for future use. Accordingly, there is a need for practical solutions for detaching thin, flexible glass from a carrier substrate, that reduce the potential for damaging the flexible glass and/or carrier substrate.

WO 2012/092026 A2 relates to a method for producing a lamina from a donor body including implanting the donor body with an ion dosage and heating the donor body to an implant temperature during implanting.

EP 2 075 633 A1 relates to a method for releasing a plate made of a brittle material from a support arrangement.

CN 103 972 133 A relates to a substrate peeling device and a peeling method.

### SUMMARY

The following presents a simplified summary of the disclosure in order to provide a basic understanding of some example aspects described in the detailed description.

In a first aspect of the disclosure, a method is provided according to claim 5.

In one example of the first aspect of the disclosure, a shape of the first substrate is fixed during step (I) and step (II). In a particular example, the method further comprises vacuum attaching the first substrate to a vacuum plate, wherein the vacuum attachment provides the shape of the first substrate that is fixed during step (I) and step (II).

In another example of the first aspect of the disclosure, the first substrate comprises a substrate selected from the group consisting of: a glass substrate and a silicon wafer.

In still another example of the first aspect of the disclosure, the first substrate includes a thickness of from about 100 microns to about 300 microns.

In yet another example of the first aspect of the disclosure, the carrier substrate includes a thickness of from about 300 microns to about 700 microns.

In a further example of the first aspect of the disclosure, a footprint of the carrier substrate is larger than a footprint of the first substrate.

In still a further example of the first aspect of the disclosure, prior to step (I), the method further comprises the step of processing the first substrate while the first substrate is bonded to the carrier substrate.

In yet a further example of the first aspect of the disclosure, the leading peripheral surface portion of the second major surface of the carrier substrate includes a length defined between a first lateral edge and a second lateral edge of the carrier substrate. Furthermore, step (I) applies pressure along substantially the entire length of the leading peripheral surface portion of the second major surface of the carrier substrate. In one particular example, step (I) includes uniformly applying the pressure along substantially the entire length of the leading peripheral surface portion. In another particular example, step (I) includes peeling the leading peripheral edge of the carrier substrate from the first substrate substantially simultaneously along the entire length of the leading peripheral surface portion.

In another example of the first aspect of the disclosure, the method further comprises the step of determining a bond strength between the carrier substrate and the first substrate based on information obtained during step (I).

In still another example of the first aspect of the disclosure, step (I) includes vacuum attaching an attachment member to the leading peripheral surface portion of the second major surface of the carrier substrate and then applying the pressure to the leading peripheral surface portion with the attachment member.

In yet another example of the first aspect of the disclosure, prior to step (I), the method further includes the step of reducing a bond strength between the carrier substrate and the first substrate.

The first aspect of the disclosure may be provided alone or in combination with any one or more of the examples of the first aspect discussed above.

In a first embodiment, a method is provided for processing a first substrate with a first major surface of the first substrate removably bonded to a first major surface of a carrier substrate. The method includes the step (I) of extending an arm over the carrier substrate, wherein an attachment member is carried by the arm. The method further includes the step (II) of vacuum attaching the attachment member to the leading peripheral surface portion of the second major surface of the carrier substrate, and the step (III) of applying pressure to the leading peripheral surface portion with the attachment member. The method according to the invention includes the step (IV) of peeling the leading peripheral edge of the carrier substrate from the first substrate with the attachment member while the attachment member pivots relative to the arm and the step (V) of continuing to peel the carrier substrate from the first substrate while the arm pivots relative to the first substrate and the vacuum plate and while the attachment member is prevented from further pivoting relative to the outer end of the arm.

In one example of the first embodiment, the attachment member pivots relative to the arm by an angle within the range of greater than 0° to about 15°.

In another example of the first embodiment, the method can include the step of controlling a bend radius of the carrier substrate while the arm pivots relative to the first substrate.

According to the invention, shape of the first substrate is fixed during the step (III) and step (IV). According to the invention, the method includes vacuum attaching the first substrate to a vacuum plate, wherein the vacuum attachment provides the shape of the first substrate that is fixed during step (III) and step (IV).

In a further example of the first embodiment, the first substrate comprises a substrate selected from the group consisting of: a glass substrate and a silicon wafer.

In yet a further example of the first embodiment, the first substrate includes a thickness of from about 100 microns to about 300 microns.

In another example of the first embodiment, the carrier substrate includes a thickness of from about 300 microns to about 700 microns.

In still another example of the first embodiment, a footprint of the carrier substrate is larger than a footprint of the first substrate.

In still another example of the first embodiment, prior to step (I), further comprising the step of processing the first substrate while the first substrate is bonded to the carrier substrate.

In a further example of the first embodiment, the leading peripheral surface portion of the second major surface of the carrier substrate includes a length defined between a first lateral edge and a second lateral edge of the carrier substrate. The method further includes the step (III) of applying pressure along substantially the entire length of the leading peripheral surface portion of the second major surface of the carrier substrate. In one particular example, step (III) includes uniformly applying the pressure along substantially the entire length of the leading peripheral surface portion. In another example, step (I) includes peeling the leading peripheral edge of the carrier substrate from the first substrate substantially simultaneously along the entire length of the leading peripheral surface portion.

In another example of the first embodiment, the method further comprises the step of determining a bond strength between the carrier substrate and the first substrate based on information obtained during step (I).

In still another example of the first embodiment, prior to step (IV), the method further includes the step of reducing a bond strength between the carrier substrate and the first substrate.

The first embodiment may be provided alone or in combination with any one or more of the examples of the first embodiment discussed above.

In a second embodiment, a peeling apparatus is configured to peel a first substrate from a second substrate according to claim 1. The peeling apparatus includes a vacuum plate, a vacuum attachment member, and an arm supporting the vacuum attachment member and pivotally attached relative to the vacuum plate. The arm is configured to extend across the vacuum plate, and the vacuum attachment member is configured to be moved away from the vacuum plate while the arm pivots relative to the vacuum plate.

The vacuum attachment member is configured to pivot relative to the arm. In one particular example, the vacuum attachment member is confined to pivot a maximum angle relative to the arm within a range of greater than 0° to about 15°.

In another example of the second embodiment, the vacuum plate is configured to translate while the vacuum attachment member moves away from the vacuum plate.

In yet another example of the second embodiment, the peeling apparatus further comprises a hinge pivotally attaching the arm relative to the vacuum plate.

In another example of the second embodiment, the hinge comprises a float hinge.

The second embodiment may be provided alone or in combination with any one or more of the examples of the second embodiment discussed above.

### BRIEF DESCRIPTION OF THE DRAWINGS

These and other aspects are better understood when the following detailed description is read with reference to the accompanying drawings, in which:
**FIG. 1** is a schematic side view of an example peeling apparatus;
**FIG. 2** is a front view of the peeling apparatus along line 2-2 of **FIG. 1****;**
**FIG. 3** is a top view of a vacuum plate of the peeling apparatus along line 3-3 of **FIG. 2****;**
**FIG. 4** is a bottom view of a vacuum attachment member and an arm of the peeling apparatus along line 4-4 of **FIG. 2****;**
**FIG. 5** is a schematic side view of the peeling apparatus of **FIG. 1** in an open orientation;
**FIG. 6** is a schematic side view of the peeling apparatus of **FIG. 1** in an open orientation with a second carrier substrate vacuum attached to the vacuum plate;
**FIG. 7** is a schematic side view of the peeling apparatus of **FIG. 1** in a closed orientation with the second carrier substrate vacuum attached to the vacuum plate and the attachment member vacuum attached to a leading peripheral surface portion of a second major surface of a first carrier substrate;
**FIG. 8** schematically illustrates uniformly applying pressure along substantially the entire length of the leading peripheral surface portion of the second major surface of the first carrier substrate;
**FIG. 9** is an enlarged partial cross section of the peeling apparatus along line 9-9 of **FIG. 8****;**
**FIG. 10** is a partial view of **FIG. 9** illustrating the step of peeling the leading peripheral edge of the first carrier substrate from the second carrier substrate and a first substrate by applying pressure to the leading peripheral surface portion of the second major surface of the first carrier substrate;
**FIG. 11** illustrates a step of controlling a bend radius of the first carrier substrate while peeling the first carrier substrate from the second carrier substrate and the first substrate;
**FIG. 12** illustrates the first carrier substrate being completely peeled from the second carrier substrate and the first substrate;
**FIG. 13** is a schematic side view of the peeling apparatus of **FIG. 1** in an open orientation with the first substrate vacuum attached to the vacuum plate;
**FIG. 14** is a schematic side view of the peeling apparatus of **FIG. 1** in a closed orientation with the first substrate vacuum attached to the vacuum plate and the attachment member vacuum attached to a leading peripheral surface portion of the second major surface of the second carrier substrate;
**FIG. 15** illustrates a step of controlling a bend radius of the second carrier substrate while peeling the second carrier substrate from the first substrate; and
**FIG. 16** illustrates example steps in methods of processing a first substrate with a first major surface of the first substrate removably bonded to a first major surface of at least one carrier substrate.

### DETAILED DESCRIPTION

Examples will now be described more fully hereinafter with reference to the accompanying drawings in which example embodiments are shown. Whenever possible, the same reference numerals are used throughout the drawings to refer to the same or like parts. However, aspects may be embodied in many different forms and should not be construed as limited to the embodiments set forth herein.

Peeling apparatus of the disclosure can be used to facilitate removal of a carrier substrate from a first substrate bonded to the carrier substrate. In one example, the peeling apparatus can facilitate initial or complete separation of a carrier substrate from a silicon wafer or a glass substrate. For instance, the peeling apparatus can be useful in initially or completely peeling a carrier substrate from a glass substrate or a silicon wafer. In some examples, the first substrate (e.g., glass substrate, silicon wafer, or a sandwich of glass substrates or silicon wafers) includes major surfaces that are removably bonded to respective first surfaces of a pair of carrier substrates with the first substrate sandwiched between the pair of carrier substrates. In such examples, the peeling apparatus can be useful in initially or completely peeling a first carrier substrate from the first substrate and the second carrier substrate. Moreover, after removing the first carrier substrate, the peeling apparatus can be useful in initially or completely peeling the second carrier substrate from the first substrate.

Flexible glass sheets are often used to manufacture liquid crystal displays (LCDs), electrophoretic displays (EPD), organic light emitting diode displays (OLEDs), plasma display panels (PDPs), touch sensors, photovoltaics, etc. To enable the handling of flexible glass sheet during processing, the flexible glass sheet may be bonded to a rigid carrier substrate using a binding agent, for example a polymer binding agent. The carrier substrate may be fabricated from glass, resin or other materials capable of withstanding conditions during processing of the first substrate (e.g., glass substrate, silicon wafer, etc.) removably bonded to the carrier substrate. In some examples, the carrier substrate and the substrate bonded to the carrier substrate can each include a thickness defined between the respective major surfaces of the substrates. The carrier substrate can optionally introduce a desired level of rigidity by providing the carrier substrate with a thickness that is greater than the thickness of the substrate removably bonded to the carrier substrate. Furthermore, in some examples, the carrier substrate can be selected with a thickness wherein the overall thickness of the carrier substrate and the substrate bonded to the carrier substrate is within a range that can be used with existing processing machinery configured to process relatively thick glass substrates having a thickness within the range of the overall thickness of the carrier substrate and the substrate bonded to the carrier substrate.

In some examples, the first substrate can comprise a glass substrate or a silicon wafer with a thickness of from about 100 microns to about 300 microns. In further examples, the carrier substrate (e.g., the first carrier substrate and the second carrier substrate discussed below) can include a thickness of from about 300 microns to about 700 microns. In such examples, the carrier substrate may include a thickness that is greater than the thickness of the first substrate (e.g., glass substrate or silicon wafer) bonded to the carrier substrate.

The rigid characteristics and size of the carrier substrate allow the bonded glass sheet to be handled in production without significant bending that may otherwise cause damage to the flexible glass sheet and/or components mounted to the flexible glass sheet. After processing (e.g., handling, adding components, treating, etc.), a peeling apparatus of the disclosure may be used to initially or completely peel the carrier substrate from the bonded first substrate (e.g., glass substrate or silicon wafer).

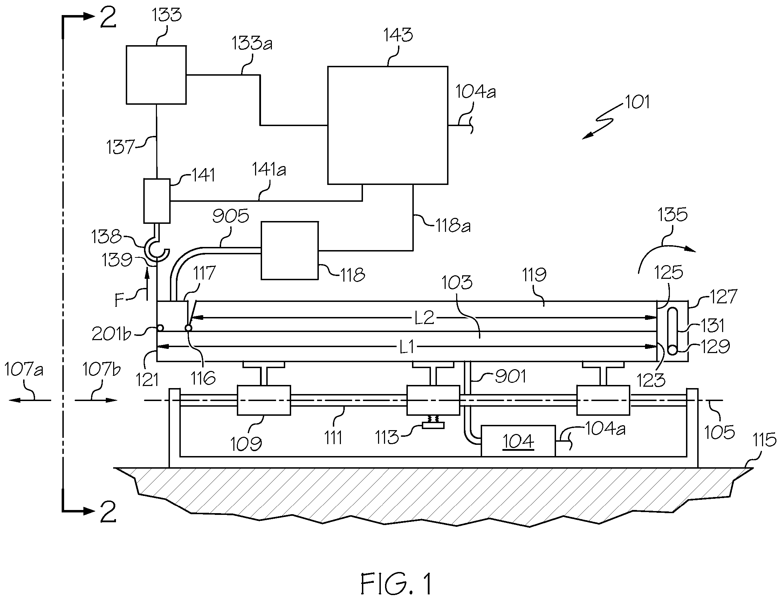

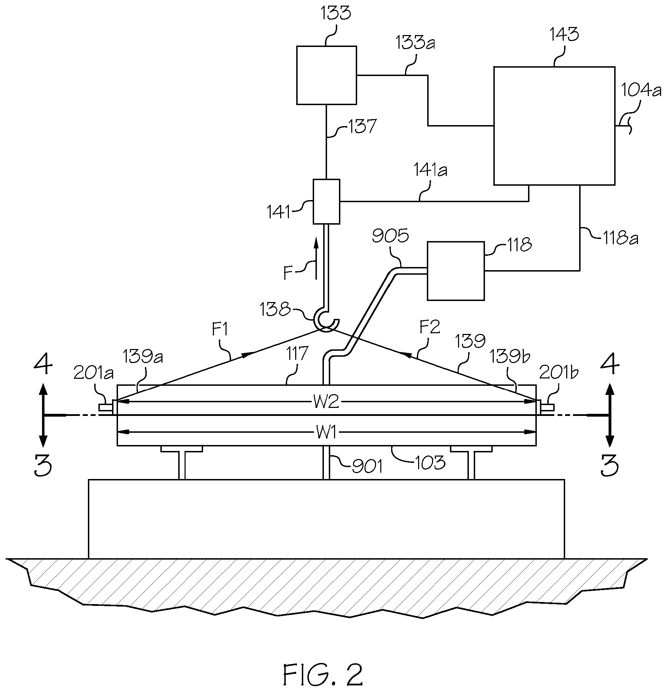

Turning to **FIGS. 1** **&** **2****,** there is shown an example peeling apparatus **101** configured to peel the carrier substrate from a first substrate. Throughout the disclosure, the first substrate can comprise a silicon wafer, glass substrate (e.g., a thin, flexible glass substrate). The peeling apparatus **101** further includes a vacuum plate **103** configured to releasably secure one of the substrates in place. For example, the vacuum plate can be vacuum attached to a major surface of a carrier substrate to releasably secure the carrier substrate in place. The vacuum plate **103** includes a length **"L1"** (see **FIG. 1**) and a width **"W1"** (see **FIG. 2**). In the illustrated example, the length **"L1"** is greater than the width **"W1"** although the length and width may be substantially equal or the width may be greater than the length in further examples.

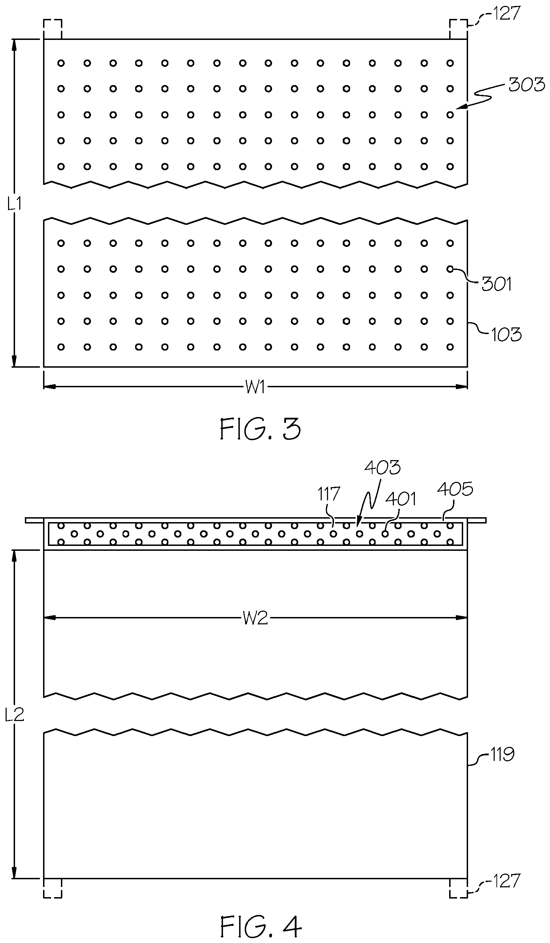

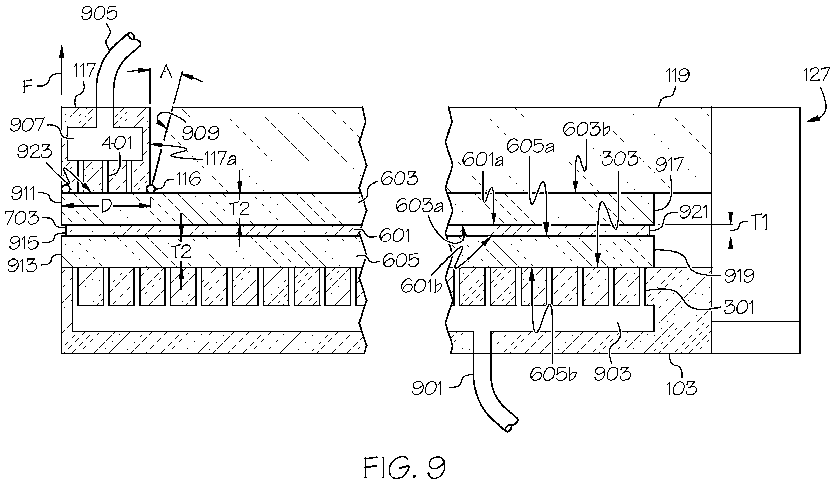

As shown in **FIG. 3****,** the vacuum plate **103** can include one or more vacuum ports, such as the illustrated plurality of vacuum ports **301** open at a surface **303** (e.g., a substantially planar surface). The plurality of vacuum ports **301** may be in fluid communication with a vacuum source **104** such as vacuum tank, vacuum pump, etc. As shown in **FIGS. 1** **and** **9****,** a vacuum conduit **901,** such as a flexible hose, may provide fluid communication between the plurality of vacuum ports **301** and the vacuum source **104.** In one example, as shown in **FIG. 9****,** a vacuum chamber **903** may be placed in fluid communication with the plurality of vacuum ports **301** such that the plurality of vacuum ports **301** are in fluid communication with the vacuum conduit **901.**

Although not shown, one or more standoffs may be provided to prevent actual engagement between the major surface of the substrate and the surface **303** of the vacuum plate **103.** Such standoffs may comprise a peripheral standoff, such as a ring circumscribing the plurality of vacuum ports **301.** In addition or alternatively, the standoffs can comprise pillars distributed between vacuum ports throughout the pattern of vacuum ports **301.** The pillars can comprise various materials such as a polymeric material. The standoffs can extend a distance of about 1.6 mm (e.g., 1/16 of an inch) although other distances may be used in further examples.

Referring to **FIG. 1****,** the vacuum plate **103** can optionally be configured to translate along a translation axis **105** in one of a first direction **107a** and a second direction **107b** opposite the first direction. For instance, as schematically illustrated, a plurality of bearings **109** may receive a translation rail **111** extending along the translation axis **105.** In some examples, the vacuum plate **103** may freely translate in one of the directions **107a, 107b** as the bearings glide along the translation rail **111.** Optionally, a locking member, such as the illustrated set screw **113,** may selectively lock the vacuum plate **103** relative to the translation rail **111.** In a locked orientation, the vacuum plate **103** may be prevented from moving relative to the translation rail **111.** Alternatively, in the unlocked orientation, the vacuum plate **103** may be able to translate relative to the translation rail **111** along one of the directions **107a, 107b.** The vacuum plate **103** may be selectively locked or unlocked to accommodate different peeling procedures. In applications where only locked orientations are contemplated, the translation mechanism may be discarded altogether. In such examples, the vacuum plate **103** may be fixedly mounted relative to a support surface **115** such as a floor, table top, stand or other support surface.

The peeling apparatus **101** further includes a vacuum attachment member **117** configured to be releasably vacuum attached relative to a leading peripheral surface portion of a second major surface of the a carrier substrate. In order to facilitate the vacuum attachment, the vacuum attachment member can include one or more vacuum ports. For instance, as shown in **FIG. 4****,** the one or more vacuum ports can comprise a plurality of vacuum ports **401** open at a surface **403** (e.g., a substantially planar surface) of the vacuum attachment member **117.** In one example, the plurality of vacuum ports **401** may be arranged in a pattern to distribute force along a width **"W2"** of the vacuum attachment member **117.**

The plurality of vacuum ports **401** may be in fluid communication with a vacuum source **118** such as vacuum tank, vacuum pump, etc. As shown in **FIGS. 1** **and** **9****,** a vacuum conduit **905,** such as a flexible hose, may provide fluid communication between the plurality of vacuum ports **401** and the vacuum source **118.** In one example, as shown in **FIG. 9****,** a vacuum chamber **907** maybe placed in fluid communication with the plurality of vacuum ports **401** such that the plurality of vacuum ports **401** are in fluid communication with the vacuum conduit **905.**

The vacuum attachment member **117** may further include a standoff that, in some examples, may prevent actual engagement between the vacuum attachment member **117** and the second major surface of the carrier substrate. For instance, the standoff can act as a bumper to protect the carrier substrate from damage due to direct contact between the vacuum attachment member and the second major surface of the carrier substrate. As schematically shown in **FIG. 4****,** one example standoff, if provided, may comprise a peripheral ring-shaped standoff **405** that circumscribes the plurality of vacuum ports **401.** The standoff **405** can comprise various materials such as a polymeric material and, in some examples, can extend a distance of about 1.6 mm (e.g., 1/16 of an inch) from the surface **403** of the vacuum attachment member **117.**

Referring to **FIGS. 1** **and** **4****,** the peeling apparatus **101** further includes an arm **119** supporting the vacuum attachment member **117.** As shown, the arm **119** can comprise a plate although the arm may comprise a frame, beam, or other structure configured to support the vacuum attachment member **117.** In some examples, the arm **119** can further include a length **"L2"** that is less than the length **"L1"** of the vacuum plate **103.** Providing the arm **119** with the relatively short length **"L2"** can allow the vacuum attachment member **117** to extend to the outer end of the vacuum plate **103** in examples where the vacuum attachment member **117** is optionally attached to the outer end of the arm **119.** Allowing the vacuum attachment member **117** to extend to the outer end of the vacuum plate **103** can help increase the leverage in applications and/or accommodate applications where the leading end of the carrier substrate is vacuum attached at or near a leading edge **121** of the vacuum plate **103.**

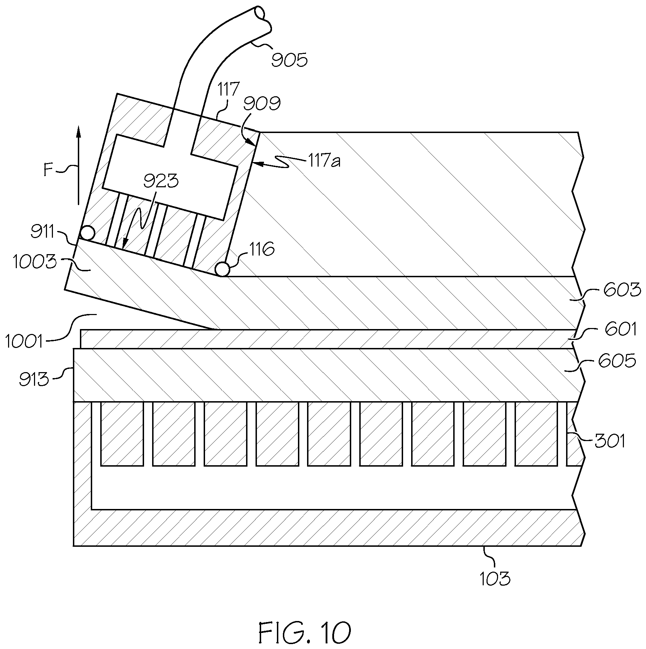

In one example, the vacuum attachment member **117** is pivotally attached relative to the arm. For instance, as shown in **FIG. 1****,** the peeling apparatus **101** can include a hinge **116** to allow pivoting of the vacuum attachment relative to the arm **119,** for example, from the position shown in **FIG. 9** to the position shown in **FIG. 10****.** In some examples, the vacuum attachment member **117** may be configured to pivot through an angle **"A"** of from greater than 0° to about 15° although other angles may be provided in further examples. In further examples, the vacuum attachment member **117** may be confined to pivot a maximum angle **"A"** relative to the arm **119,** for example, from greater than 0° to about 15° although other maximum angles may be provided in further examples. Confining the pivot angle can be achieved in a variety of ways. For example, a wedge-shaped opening can exist between an abutment surface **117a** of the vacuum attachment member **117** and an abutment surface **909** of the arm **119.** Consequently, once the vacuum attachment member **117** pivots through the maximum angle **"A",** as shown in **FIG. 10****,** the abutment surfaces **117a, 909** abut one another, thereby acting as a stop to prevent further pivoting between the vacuum attachment member **117** and the arm **119.**

The arm **119** is also pivotally attached relative to the vacuum plate **103.** For example, as shown in **FIG. 1****,** the trailing end **123** of the vacuum plate **103** can be pivotally attached relative to a trailing end **125** of the arm **119** with a hinge. In some example, the hinge can comprise a float hinge **127** although fixed hinge configurations may be used in alternative examples. The float hinge **127** can include a hinge pin **129** configured to translate and rotate within the slot **131.** Consequently, the float hinge **127** can allow different thickness substrate stacks to be processed with the peeling apparatus **101.**

As shown in **FIG. 1****,** the peeling apparatus **101** can also include an actuator **133** configured to apply a force **"F"** to the vacuum attachment member **117** to lift the vacuum attachment member **117** and consequently cause the arm **119** to pivot in direction **135** about the float hinge **127.** In just one example, the force **"F"** can be applied through a link **137** connected (e.g., with hook **138)** to a flexible filament **139** (e.g., wire, cable, etc). For instance, as shown in **FIG. 2****,** one end **139a** of the filament **139** can be attached to a first pin **201a** extending from a first side of the vacuum attachment member **117** while the other end **139b** of the filament **139** can be attached to a second pin **201b** extending from a second side of the vacuum attachment member **117.** Application of the force **"F"** through the link **137** can result in application of tensile forces **"F1"**, **"F2"** to the first pin **201a** and second pin **201b.** Moreover, as shown in **FIG. 1****,** the moment arm about the float hinge **127** is maximized since the pins **201a, 201b** are positioned at the outermost leading end of the vacuum attachment member **117.** As such the leverage may be maximized to more efficiently apply the force **"F"** to initiate peeling of the substrates.

As further illustrated in **FIGS. 1** **and** **2****,** the peeling apparatus **101** may also include a load sensor **141** configured to sense the force **"F"** being applied by the actuator **133.** Information from the load sensor **141** may be sent back to a control device **143** (e.g., programmable logic controller) by way of communication line **141a.** The control device **143** can be configured to (e.g., "programmed to", "encoded to", designed to", and/or "made to") control the actuator **133** by way of communication line **133a** and the vacuum sources **104, 118** by way of respective communication lines **104a, 118a.**

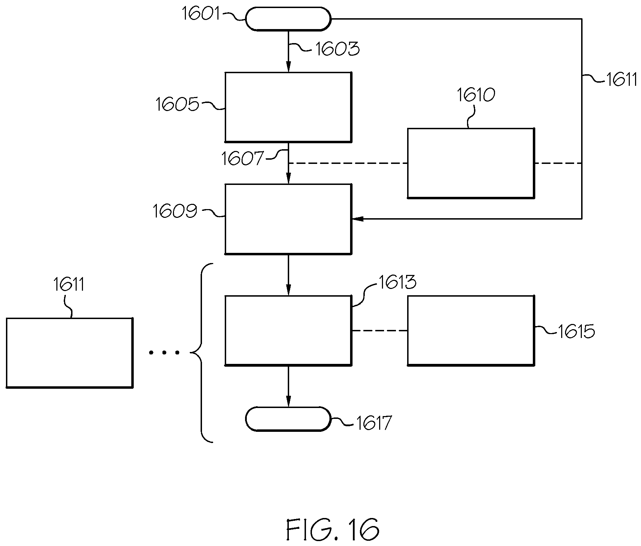

Methods of processing will now be described with initial reference to **FIG. 16****.** The method can start with step **1601** with a first substrate including a first major surface of the first substrate removably bonded to a first major surface of carrier substrate. Throughout the application, the first substrate can be removably bonded to the carrier substrate by a polymer binding agent or other material that can withstand processing conditions while permitting the substrates to be subsequently peeled at least partially apart.

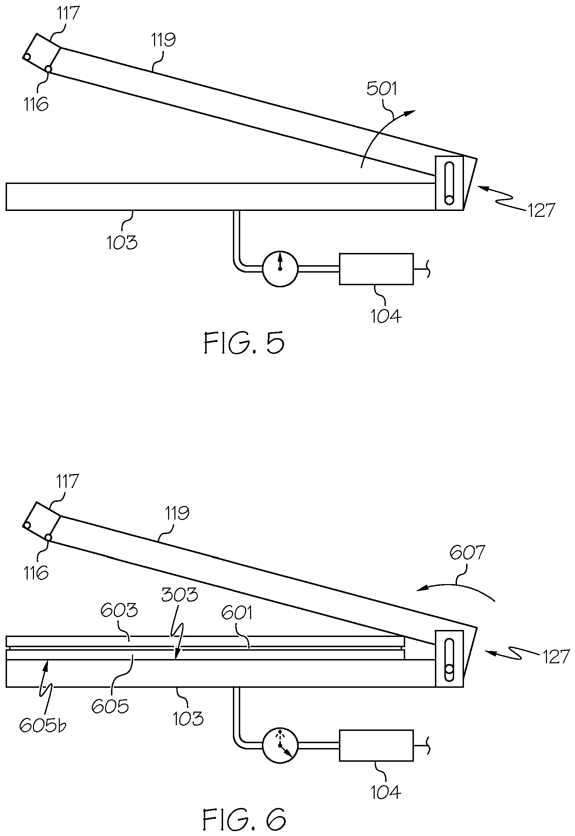

In one example of step **1601,** as shown in **FIGS. 6-12****,** the method can start with a first substrate **601** comprising a glass substrate (e.g., a thin, flexible glass substrate) or a silicon wafer. The first substrate **601** may be made of one or more layers. For example, the first substrate **601** may be a display panel including a backplane substrate, a cover substrate, and display elements disposed therebetween. The method can also start with a first carrier substrate **603** (e.g., glass carrier substrate) and a second carrier substrate **605** (e.g., glass carrier substrate) with the first substrate **601** sandwiched between the first and second carrier substrates **603, 605.** As shown in **FIG. 9****,** in some examples, the first substrate **601** can include a thickness **T1** from about 100 microns to about 300 microns between a first major surface **601a** and a second major surface **601b** of the first substrate **601.** As further shown in **FIG. 9****,** in some examples, the first and second carrier substrates **603, 605** can each include a thickness **T2** from about 300 microns to about 700 microns between a respective first major surface **603a, 605a** and a respective second major surface **603b, 605b** of the respective carrier substrates **603, 605.** As further illustrated in **FIG. 9****,** in some examples, the thickness **T2** of the carrier substrates **603, 605** can be greater than the thickness **T1** of the first substrate **601.** Providing relatively thicker carrier substrates can help increase the effective stiffness of the first substrate (e.g., glass substrate or silicon wafer) to facilitate processing of the first substrate. A relatively thicker carrier substrate can also help significantly contribute to increasing the effective stiffness of the first substrate bonded to the second substrate.

As illustrated in **FIG. 9****,** the first major surface **603a** of the first carrier substrate **603** can be removably bonded to the first major surface **601a** of the first substrate **601.** Likewise, the first major surface **605a** of the second carrier substrate **605** can be removably bonded to the second major surface **601b** of the first substrate **601.** Moreover, as further shown in **FIG. 9** the carrier substrates **603, 605** can each include a footprint that is larger than a footprint of the first substrate **601.** Indeed, the leading peripheral edges **911, 913** of the respective carrier substrates **603, 605** each extend beyond a leading peripheral edge **915** of the first substrate **601.** In addition, the trailing peripheral edges **917, 919** of the respective carrier substrates **603, 605** can each extend beyond a trailing peripheral edge **921** of the first substrate **601.** In fact, in some examples, all of the peripheral edges of the carrier substrates **603, 605** can optionally extend beyond the corresponding peripheral edges of the first substrate **601** by various distances, for example from about 0.5 mm to about 3 mm. Providing the carrier substrates **603, 605** with a larger footprint than the first substrate **601** can help protect the relatively fragile peripheral edges of the first substrate from damage during processing (e.g., handling). Indeed, any impact to the edges of the bonded substrates would tend to occur at the outwardly extending peripheral edges of one of the carrier substrates **603, 605** that would act to protect the relatively fragile outer peripheral edges of the first substrate **601.**

Although not shown in **FIGS. 6-12****,** the footprint of the first substrate **601** and the carrier substrates **603, 605** may be substantially equal in further examples. Providing substantially equal footprints may simplify manufacturing. For example, the first substrate or a layer of the first substrate and one or more of the carrier substrates may be first bonded together and then the bonded substrates may be separated along a common separation path wherein the substrates consequently have substantially identical footprints.

In still another example, although not shown in **FIGS. 6-12****,** the first substrate **601** may have a footprint that is larger than one or more of the carrier substrates **603, 605** such that one or all of the outer peripheral edges of the first substrate extend beyond the respective outer peripheral edges of the respective carrier substrate. Alternatively, regardless of the relative footprint size, although not shown, the leading peripheral edge **915** of the first substrate can optionally include an overhung portion (e.g., tab) that extends beyond the leading peripheral edges **911, 913** of the respective carrier substrates **603, 605,** for example, from about 50 microns to about 150 microns such as about 100 microns. Such examples can be beneficial to help peel the leading peripheral edge of the carrier substrates from the first substrate.

As further shown in **FIG. 16****,** any of the methods of the disclosure can optionally proceed along arrow **1603** from the start **1601** to a step **1605** of processing the first substrate **601,** or a layer of the first substrate, while the first substrate **601** is bonded to at least one of the carrier substrates **603, 605.** The first substrate **601,** or the layer of the first substrate, can be processed, for example, to include electronics, color filters, touch sensors, liquid crystal wells and other electronics in display applications. In another example, processing can include etching of the glass or otherwise working the glass substrate. When using a silicon wafer, processing can include cutting the silicon wafer into smaller pieces or otherwise processing the silicon wafer to manufacture electronic components.

As shown by arrow **1607,** after the step **1605** of processing, the method can then proceed to the step **1609** of peeling the leading peripheral edge **911** of the first carrier substrate **603** from the first substrate **601** by applying pressure to a leading peripheral surface **923** portion of the second major surface **603b** of the first carrier substrate **603.** Alternatively, as indicated by arrow **1611,** the method can proceed directly from the start **1601** to the step **1609** of peeling. For instance, the method may start at step **1601** with the processing step already carried out.

In order to prepare for the step **1609** of peeling, as shown in **FIG. 5****,** the arm **119** together with the vacuum attachment member **117** attached to a distal end of the arm can be pivoted in direction **501** about the float hinge **127** to an open orientation.

Next, as shown in **FIG. 6****,** after the second carrier substrate **605** is positioned over the vacuum plate **103.** The vacuum source **104** can apply vacuum and consequent suction through the plurality of vacuum ports **301.** The second major surface **605b** of the second carrier substrate **605** is thereafter vacuum attached to the surface **303** of the vacuum plate **103.** Once vacuum attached, the shape of the second carrier substrate **605** and consequently the shape of the first carrier substrate **601** bonded to the second carrier substrate 605 have a shape that is fixed. Indeed, the step of vacuum attaching the second carrier substrate **605** with the bonded first carrier substrate **601** to the vacuum plate **103** fixes the shape of the first substrate **601.** In the illustrated example, the first substrate **601** can be fixed in a substantially flat planar shape although other shapes may be desired in further examples. Fixing the shape can help prevent damage to the first substrate **601** and/or electrical components or other features provided by processing the first substrate **601** during the step of peeling.

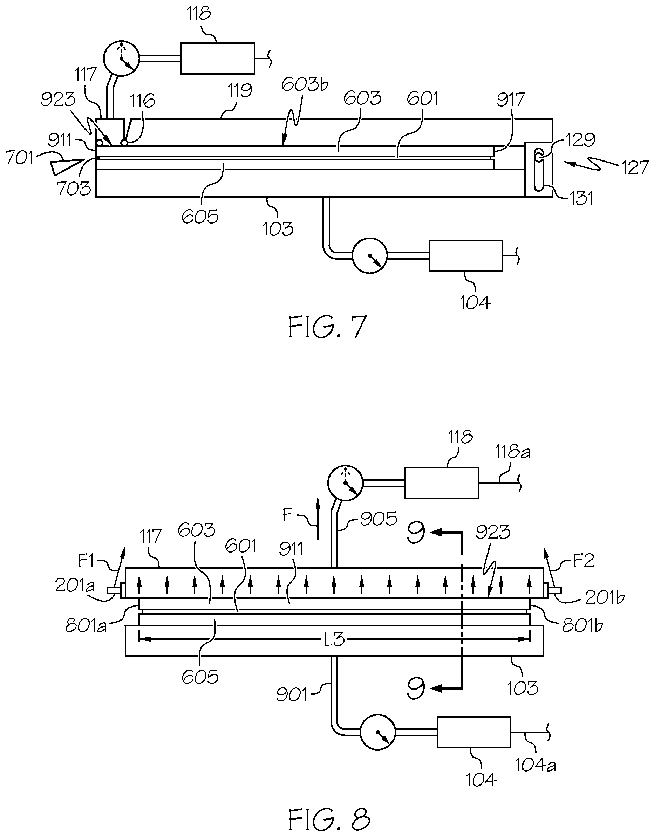

Before, during or after vacuum attaching the second carrier substrate **605** to the vacuum plate **103, the** arm **119** together with the vacuum attachment member **117** can be pivoted in direction **607** about the float hinge **127** to a closed orientation shown in **FIG. 7****.** In the closed orientation shown in **FIG. 7****,** the arm **119** extends across the first carrier substrate **603** in a direction from the trailing peripheral edge **917** to the leading peripheral edge **911** of the first carrier substrate **603.** As further shown in **FIG. 7****,** the hinge pin **129** may travel up the slot **131** of the float hinge **127** in response to the arm being closed over the overall thickness of the first substrate and the carrier substrates.

Optionally, before beginning the step **1609** of peeling, the method may include the step **1610** of reducing a bond strength between the first carrier substrate **603** and the first substrate **601.** For instance, as shown in **FIG. 7****,** a razor **701** or other device can be used to attack an interface **703** to reduce the bond strength, thereby facilitating the initial peeling of the first carrier substrate from the first substrate.

As shown in **FIG. 7****,** the step **1609** of peeling can include the step of vacuum attaching the attachment member **117** to the leading peripheral surface portion **923** of the second major surface **603b** of the first carrier substrate **603.** Indeed, the vacuum source **118** can apply vacuum and consequent suction through the plurality of vacuum ports **401** such that the leading peripheral surface portion **923** is vacuum attached to the surface **403** of the vacuum attachment member **117.**

As shown in **FIG. 8****,** the leading peripheral surface portion **923** of the first carrier substrate **603** can include a length **"L3"** defined between a first lateral edge **801a** and a second lateral edge **801b** of the first carrier substrate **603.** As shown in the figures, the length **"L3"** extends in the same direction as the width **"W1"** of the vacuum plate **103.** In some examples, vacuum attachment provided by the vacuum surface **403** of the vacuum attachment member **117** extends along substantially the entire length **"L3"** of the leading peripheral surface portion **923** of the carrier substrate **603.** In further examples, the vacuum attachment may extend from about 70% to about 100% of the length **"L3",** such as from about 85% to about 100%, such as from about 90% to about 100%, such as about 95% to about 100% of the length **"L3".** Increasing the extent to which the vacuum attachment extends along the length **"L3"** can help evenly distribute the pressure applied by the vacuum attachment member **117** across the length **"L3"** of the leading peripheral edge **911** to reduce stress concentrations and allow simultaneous peeling along the entire length **"L3".**

The step **1609** of peeling can then apply the force **"F"** to the vacuum attachment member **117** that consequently applies a corresponding pressure to the leading peripheral surface portion **923.** Indeed, with reference to **FIG. 2****,** the actuator **133** can apply the force **"F"** in the upward direction that causes tensile forces **"F1"** and **"F2"** to be applied to the pins **201a, 201b** of the vacuum attachment member **117.** Consequently, the vacuum attachment member **117** distributes this force over the vacuum surface **403** to apply the pressure cross the area of the leading peripheral surface portion **923.**

As shown by the pressure distribution represented schematically by a row of parallel arrows in **FIG. 8****,** the method can uniformly apply the pressure to the leading peripheral surface portion **923** along the length **"L3"** of the leading peripheral surface portion **923** of the first carrier substrate **603.** As such, stress can be distributed evenly across the leading peripheral edge **911** to avoid unnecessarily high stress concentrations along the leading peripheral edge. As shown in **FIG. 9****,** since the force is being applied a distance **"D"** from the hinge **116,** the force can be concentrated at the interface **703** between the leading peripheral edge **911** and the first substrate **601.** Eventually, as shown in **FIG. 10****,** the stress at the leading peripheral edge **911** results in an initial separation **1001** between the leading peripheral edge **911** and the first substrate **601** wherein an outer portion **1003** of the first carrier substrate **603** is pivoted about hinge **116.** Initial separation may begin at any location along the length **"L3"** of the leading peripheral surface portion. Alternatively, in some examples, the step of peeling can peel the leading peripheral edge **911** of the first carrier substrate **603** from the first substrate **601** substantially simultaneously along the entire length **"L3"** of the leading peripheral surface portion **923.** Simultaneous peeling along the entire length **"L3"** of the leading peripheral surface portion **923** can be achieved with uniform application of pressure along the entire length of the leading peripheral surface portion **923** and can help reduce unnecessary stress spikes along the leading peripheral edge **911** that may otherwise damage the first carrier substrate **603.**

Sometime after the step **1609** of peeling the leading peripheral edge **911** of the first carrier substrate **603,** the method can optionally include the step **1611** of determining a bond strength between the leading peripheral edge **911** (e.g., edge portion) of the first carrier substrate **603** and the first substrate **601** based on information obtained during the step **1609** of peeling. For instance, information (e.g., a force measurement) from the load sensor **141** can be transmitted by the communication line **141a** to the control device **143.** The control device **143** can be configured to monitor the information from the load sensor **141** and may be further configured to identify when the initial separation **1001** occurs due to a spike in the information, such as a force measurement, that occurs at the time of the initial separation **1001.** The information provided by the load sensor **141** at the time of the initial separation **1001** can be used to determine (e.g., calculate) the bond strength between the leading peripheral edge **911** of the first carrier substrate **603** and the first substrate **601.** The bond strength can be used in a wide variety of ways. For instance, determining the bond strength can be used to help determine the specifications of the first substrate bonded to the carrier substrate. This information can be provided to vendors that may desire this information for appropriate further processing of the first substrate. The bond strength can also be provided as feedback to the control device **143** for modifying a subsequent process of separating a subsequent first carrier substrate from a subsequent first substrate. Indeed, the series of separation procedures may be assumed to involve substrates with similar bonding strength. As such, feedback of the bonding strength can be used to help fine tune the process to increase efficiency and effectiveness of separation (e.g., reducing time to initial separation, maintaining a minimum bend radius while separating, etc.).

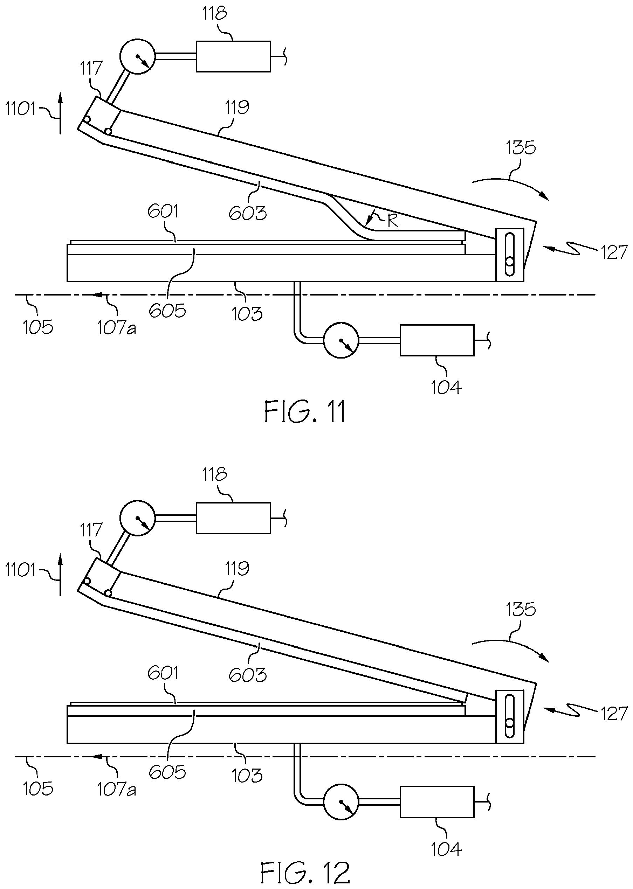

After the step **1609** of peeling the leading peripheral edge **911,** the method can further include the step **1613** of completely removing the first carrier substrate **603** from the first substrate **601.** In still another example, as shown in **FIGS. 11 and 12** the step **1613** of completely removing the first carrier substrate 603 from the first substrate **601** comprises completely peeling the first carrier substrate from the first substrate. Indeed, vacuum attachment member **117** can be lifted while the arm **119** pivots in direction **135** about the float hinge **127** to such that the peel apparatus **101** achieves the open orientation. As shown in **FIGS. 11 and 12****,** in some examples, the vacuum plate **103** can optionally be configured to translate along a translation axis **105** defined by the peeling apparatus **101** (see **FIG. 1**) in the first direction **107a** while the attachment member **117** is lifted in direction **1101.** In some directions, direction **1101** may be perpendicular to direction **107a** although other angles may be provided in further examples. Allowing the vacuum plate **103** to translate along direction **107a** while the attachment member **117** is lifted can be beneficial to direct the force in a vertical direction without necessarily moving the position of the actuator **133** to more effectively apply the force to the peeling procedure. In the open orientation shown in **FIG. 12****,** the first carrier substrate **603** is completely peeled from the first substrate **601** even though the figure illustrates the first carrier substrate **603** touching (without adhesion) on an outer corner of the first substrate **601.**

In some examples, during the step of peeling (e.g., initially peeling, partially peeling, completely peeling) the first substrate from the second substrate, the method can further include the step **1615** of controlling a bend radius **"R"** (see **FIG. 11**) of the first carrier substrate **603.** Indeed, in some examples, the bend radius **"R"** of the carrier substrate may be controlled while the arm **119** pivots relative to the first substrate **601.** There may be a desire to ensure that the first carrier substrate **603** is not peeled in such a way that the bend radius is smaller than a predetermined minimum bend radius. The predetermined minimum bend radius may be a radius that the first carrier substrate **603** may be safely bent without a significant probability of breaking or otherwise being damaged. In one example, the control device **143** may control the actuator **133** to provide a predetermined varying force **"F"** over time after initial separation **1001.** Varying the force **"F"** in a controlled manner over time can be designed to ensure that the bend radius **"R"** does not fall below a predetermined minimum bend radius. In further examples, although not shown, a proximity sensor may be provided that senses the actual bend radius of the first carrier substrate wherein the control device **143** can appropriately modify the force **"F"** applied by the actuator based on feedback from the proximity sensor.

Once the step **1613** of completely removing the first carrier substrate **603** from the first substrate 601 is complete, the method can end at step **1617.**

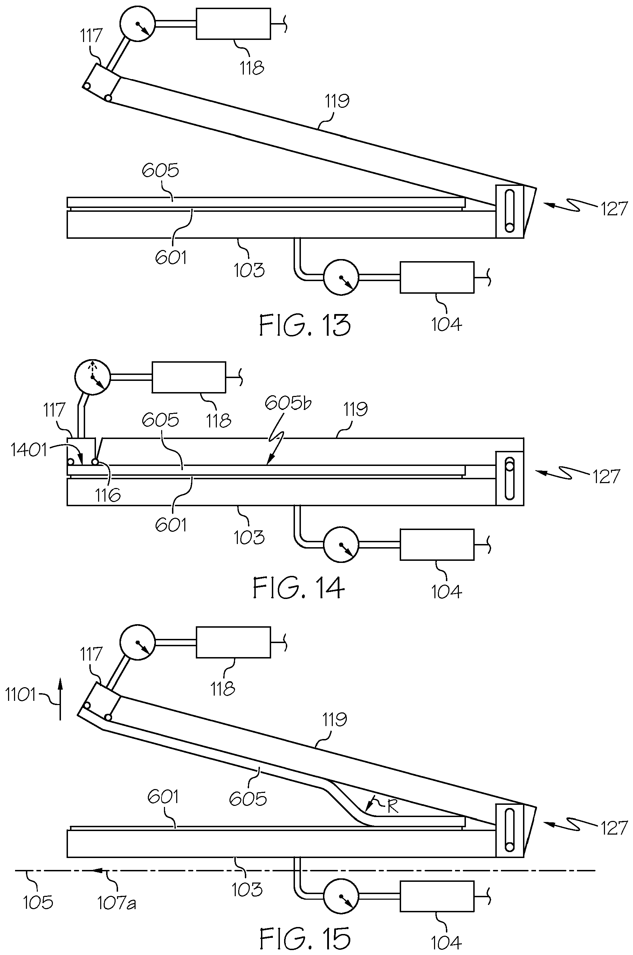

The method described with respect to **FIG. 16** and **FIGS. 1****-12** can be carried out with a wide range of substrates. **FIGS. 13-15** illustrate another example that, unless otherwise noted, can include identical steps and/or equivalent steps discussed with respect to **FIG. 16** and **FIGS. 1****-12** above. As shown in **FIG. 13-15****,** after removing the first carrier substrate **603** (or where there is only one carrier substrate), the second carrier substrate **605** may also be removed from the first substrate **601.** Indeed, as shown in **FIG. 13****,** the first substrate **601** can be vacuum attached to the vacuum plate **103.** As shown in **FIG. 14****,** the vacuum attachment member **117** can be vacuum attached to the leading peripheral surface portion **1401** of the second major surface **605b** of the second carrier substrate **605.** Similarly as discussed above, the second carrier substrate **605** can be peeled, and eventually completely peeled, from the first substrate **601** as shown in **FIG. 15****.**

## Claims

1. A peeling apparatus configured to peel a first substrate (601) from a second substrate comprising:
a vacuum plate (103);
a vacuum attachment member (117); and
an arm (119) supporting the vacuum attachment member (117) and a trailing end (125) pivotally attached relative to the vacuum plate (103), wherein the arm (119) is configured to extend across the vacuum plate (103), and wherein the vacuum attachment member (117) is configured to be moved away from the vacuum plate (103) while the arm (119) pivots relative to the vacuum plate (103), **characterized in that**
the vacuum attachment member is configured to pivot relative to the arm.

2. The peeling apparatus of claim 1, wherein the vacuum attachment member (117) is confined to pivot a maximum angle relative to the arm (119) within a range of greater than 0° to 15°.

3. The peeling apparatus of claim 1 or 2, wherein the vacuum plate (103) is configured to translate while the vacuum attachment member (117) moves away from the vacuum plate (103).

4. The peeling apparatus of any one of claims 1-3, further comprising a hinge pivotally attaching the arm (119) relative to the vacuum plate (103), wherein the hinge comprises a float hinge (127).

5. A method of processing a first substrate (601) with a first major surface (601a) of the first substrate (601) removably bonded to a first major surface (603a, 605a) of a carrier substrate (603, 605), the method comprising the steps of:
(I) extending an arm (119) over the carrier substrate (603, 605), wherein an attachment member (117) is carried by the arm (119);
(II) vacuum attaching the attachment member (117) to the leading peripheral surface portion of the second major surface (603b, 605b) of the carrier substrate (603, 605);
(III) applying pressure to the leading peripheral surface portion with the attachment member (117);
(IV) peeling the leading peripheral edge (911, 913) of the carrier substrate (603, 605) from the first substrate (601) with the attachment member (117) while the attachment member (117) pivots relative to the arm (119); and
(V) continuing to peel the carrier substrate (603, 605) from the first substrate (601) while the arm (119) pivots relative to the first substrate (601) and the vacuum plate (103).

6. The method of claim 5, wherein, during step (IV), the attachment member (117) pivots relative to the arm (119) by an angle within the range of greater than 0° to 15°.

7. The method of claim 5, further comprising the step of controlling a bend radius of the carrier substrate while the arm pivots relative to the first substrate.

8. The method of claim 5, wherein a shape of the first substrate (601) is fixed during at least one of the steps (III)-(V).

9. The method of claim 8, further comprising vacuum attaching the first substrate (601) to a vacuum plate (103), wherein the vacuum attachment provides the shape of the first substrate (601) that is fixed during the at least one of the steps (III)-(V).

10. The method of claim 5, wherein the leading peripheral surface portion of the second major surface (603b, 605b) of the carrier substrate (603, 605) includes a length defined between a first lateral edge (801a) and a second lateral (801b) edge of the carrier substrate (603, 605), and step (III) applies pressure along the entire length of the leading peripheral surface portion of the second major surface (603b, 605b) of the carrier substrate (603, 605).

11. The method of claim 5, further comprising the step of determining a bond strength between the carrier substrate (603, 605) and the first substrate (601) based on information obtained during step (IV).

12. The method of claim 5, wherein prior to step (IV), further including the step of reducing a bond strength between the carrier substrate (603, 605) and the first substrate (601).

## Patentansprüche

1. Ablösevorrichtung, die zum Ablösen eines ersten Substrats (601) von einem zweiten Substrat gestaltet ist, umfassend:
eine Vakuumplatte (103);
ein Vakuumbefestigungselement (117); und
einen Arm (119), der das Vakuumbefestigungselement (117) trägt, und ein hinteres Ende (125), das drehbar im Verhältnis zu der Vakuumplatte (103) befestigt ist, wobei der Arm (119) so gestaltet ist, dass er sich über die Vakuumplatte (103) erstreckt, und wobei das Vakuumbefestigungselement (117) so gestaltet ist, dass es von der Vakuumplatte (103) weg bewegt wird, während sich der Arm (119) im Verhältnis zu der Vakuumplatte (103) dreht, **dadurch gekennzeichnet, dass**
das Vakuumbefestigungselement so gestaltet ist, dass es sich im Verhältnis zu dem Arm dreht.

2. Ablösevorrichtung nach Anspruch 1, wobei das Vakuumbefestigungselement (117) begrenzt ist, so dass es sich in einem maximalen Winkel im Verhältnis zu dem Arm (119) innerhalb eines Bereichs von über 0° bis 15° dreht.

3. Ablösevorrichtung nach Anspruch 1 oder 2, wobei die Vakuumplatte (103) so gestaltet ist, dass sie versetzt wird, während sich das Vakuumbefestigungselement (117) von der Vakuumplatte (103) weg bewegt.

4. Ablösevorrichtung nach einem der Ansprüche 1 bis 3, die ferner ein Scharnier umfasst, das den Arm (119) drehbar im Verhältnis zu der Vakuumplatte (103) befestigt, wobei das Scharnier ein schwimmendes Scharnier (127) umfasst.

5. Verfahren zur Verarbeitung eines ersten Substrats (601), wobei eine erste Hauptoberfläche (601a) des ersten Substrats (601) entfernbar mit eine ersten Hauptoberfläche (603a, 605a) eines Trägersubstrats (603, 605) verbunden ist, wobei das Verfahren die folgenden Schritte umfasst:
(I) Erstrecken eines Arms (119) über das Trägersubstrat (603, 605), wobei ein Befestigungselement (117) durch den Arm (119) getragen wird;
(II) Befestigen des Befestigungselements (117) mittels Vakuum an dem vorderen peripheren Oberflächenteil der zweiten Hauptoberfläche (603b, 605b) des Trägersubstrats (603, 605);
(III) Ausüben von Druck auf den vorderen peripheren Oberflächenteil mit dem Befestigungselement (117);
(IV) Ablösen der vorderen peripheren Kante (911, 913) des Trägersubstrats (603, 605) von dem ersten Substrat (601) mit dem Befestigungselement (117), während sich das Befestigungselement (117) im Verhältnis zu dem Arm (119) dreht; und
(V) Fortsetzen des Ablösens des Trägersubstrats (603, 605) von dem ersten Substrat (601), während sich der Arm (119) im Verhältnis zu dem ersten Substrat (601) und der Vakuumplatte (103) dreht.

6. Verfahren nach Anspruch 5, wobei sich das Befestigungselement (117) während Schritt (IV) im Verhältnis zu dem Arm (119) in einem Winkel im Bereich von über 0° bis 15° dreht.

7. Verfahren nach Anspruch 5, das ferner den Schritt der Regelung eines Krümmungsradius des Trägersubstrats umfasst, während sich der Arm im Verhältnis zu dem ersten Substrat dreht.

8. Verfahren nach Anspruch 5, wobei eine Form des ersten Substrats (601) während mindestens einem der Schritte (III) bis (V) feststehend ist.

9. Verfahren nach Anspruch 8, das ferner die Befestigung des ersten Substrats (601) mittels Vakuum an einer Vakuumplatte (103) umfasst, wobei die Vakuumbefestigung die Form des ersten Substrats (601) bereitstellt, die während dem mindestens einen Schritt der Schritte (III) bis (V) feststehend ist.

10. Verfahren nach Anspruch 5, wobei der vordere periphere Oberflächenteil der zweiten Hauptoberfläche (603b, 605b) des Trägersubstrats (603, 605) eine Länge aufweist, die zwischen einer ersten lateralen Kante (801a) und einer zweiten lateralen (801b) Kante des Trägersubstrats (603, 605) definiert ist, und wobei Schritt (III) Druck entlang der gesamten Länge des vorderen peripheren Oberflächenteils der zweiten Hauptoberfläche (603b, 605b) des Trägersubstrats (603, 605) ausübt.

11. Verfahren nach Anspruch 5, das ferner den Schritt einer Bindungsstärke zwischen dem Trägersubstrat (603, 605) und dem ersten Substrat (601) auf der Basis der in Schritt (IV) erhaltenen Informationen umfasst.

12. Verfahren nach Anspruch 5, wobei das Verfahren vor Schritt (IV) ferner den Schritt des Verringerns einer Bindungsstärke zwischen dem Trägersubstrat (603, 605) und dem ersten Substrat (601) umfasst.

## Revendications

1. Appareil de décollage conçu pour décoller un premier substrat (601) d'un second substrat comprenant :
une plaque à vide (103) ;
un élément de fixation à vide (117) ; et
un bras (119) supportant l'élément de fixation à vide (117) et une extrémité arrière (125) fixée de manière pivotante par rapport à la plaque à vide (103), le bras (119) étant conçu pour s'étendre à travers la plaque à vide (103), et l'élément de fixation à vide (117) étant conçu pour être éloigné de la plaque à vide (103) tandis que le bras (119) pivote par rapport à la plaque à vide (103), **caractérisé en ce que**
l'élément de fixation à vide est conçu pour pivoter par rapport au bras.

2. Appareil de décollage selon la revendication 1, l'élément de fixation à vide (117) étant confiné pour pivoter d'un angle maximum par rapport au bras (119) dans une plage supérieure à une plage de plus de 0° à 15°.

3. Appareil de décollage selon la revendication 1 ou 2, la plaque à vide (103) étant conçue pour se déplacer en translation tandis que l'élément de fixation à vide (117) s'éloigne de la plaque à vide (103).

4. Appareil de décollage selon l'une quelconque des revendications 1 à 3, comprenant en outre une charnière fixant de manière pivotante le bras (119) par rapport à la plaque à vide (103), la charnière comprenant une charnière flottante (127).

5. Procédé de traitement d'un premier substrat (601), une première surface principale (601a) du premier substrat (601) étant liée de manière amovible à une première surface principale (603a, 605a) d'un substrat porteur (603, 605), le procédé comprenant les étapes consistant à :
(I) étendre un bras (119) sur le substrat porteur (603, 605), un élément de fixation (117) étant porté par le bras (119) ;
(II) fixer sous vide l'élément de fixation (117) à la partie de surface périphérique avant de la seconde surface principale (603b, 605b) du substrat porteur (603, 605) ;
(III) appliquer une pression sur la partie de surface périphérique avant avec l'élément de fixation (117) ;
(IV) décoller le bord périphérique avant (911, 913) du substrat porteur (603, 605) du premier substrat (601) avec l'élément de fixation (117) tandis que l'élément de fixation (117) pivote par rapport au bras (119) ; et
(V) continuer à décoller le substrat porteur (603, 605) du premier substrat (601) tandis que le bras (119) pivote par rapport au premier substrat (601) et à la plaque à vide (103).

6. Procédé selon la revendication 5, pendant l'étape (IV), l'élément de fixation (117) pivotant par rapport au bras (119) d'un angle compris dans la plage de plus de 0° à 15°.

7. Procédé selon la revendication 5, comprenant en outre l'étape consistant à commander un rayon de courbure du substrat porteur tandis que le bras pivote par rapport au premier substrat.

8. Procédé selon la revendication 5, une forme du premier substrat (601) étant fixée pendant au moins une des étapes (III) à (V).

9. Procédé selon la revendication 8, comprenant en outre l'étape consistant à fixer sous vide le premier substrat (601) à une plaque à vide (103), la fixation sous vide donnant la forme du premier substrat (601) qui est fixé pendant au moins une des étapes (III) à (V).

10. Procédé selon la revendication 5, la partie de surface périphérique avant de la seconde surface principale (603b, 605b) du substrat porteur (603, 605) comprenant une longueur définie entre un premier bord latéral (801a) et un second bord latéral (801b) du substrat porteur (603, 605), et l'étape (III) appliquant une pression sur toute la longueur de la partie de surface périphérique avant de la seconde surface principale (603b, 605b) du substrat porteur (603, 605).

11. Procédé selon la revendication 5, comprenant en outre l'étape consistant à déterminer une force de liaison entre le substrat porteur (603, 605) et le premier substrat (601) sur la base des informations obtenues au cours de l'étape (IV).

12. Procédé selon la revendication 5, avant l'étape (IV), comprenant en outre l'étape consistant à réduire une force de liaison entre le substrat porteur (603, 605) et le premier substrat (601).
